# EUROPÄISCHE PATENTANMELDUNG

(11) **EP 1 617 498 A2**
(43) Veröffentlichungstag der Anmeldung: **18.01.2006**
(21) Anmeldenummer: 05014730.5
(22) Anmeldetag: 07.07.2005
(51) Int. Cl.: H01M 4/66, H01M 10/40

(54) **Galvanisches Element**

(30) Priorität: 13.07.2004 DE 102004035142
(71) Anmelder: VARTA Microbattery GmbH, 30419 Hannover (DE)
(72) Erfinder: Haug, Peter, 73479 Ellwangen (DE); Wöhrle, Thomas, 73479 Ellwangen (DE); Birke, Peter, 73479 Ellwangen (DE); Hald, Rainer, 73479 Ellwangen (DE); Ilic, Dejan, 73479 Ellwangen (DE)
(74) Vertreter: Patentanwälte Ruff, Wilhelm, Beier, Dauster & Partner

(57) **Zusammenfassung**

Bei einem galvanischen Element mit mindestens einer Lithium interkalierenden Elektrode ist der im wesentlichen aus Aluminium bestehende Kollektor der positiven Elektrode mit einer Deckschicht aus einem Benzotriazolderivat konserviert. Vom Kollektor wird vor Aufbringung der Deckschicht die Oxidschicht mittels eines nasschemischen Ätzverfahrens entfernt. Der positive Kollektor ist ein Aluminiumstreckgitter bzw. Aluminiumstreckmetall oder eine in beliebiger Geometrie gelochte oder massive Aluminiumfolie.

Die Deckschicht ist mittels eines Tauchverfahrens auf den Aluminium-Kollektor aufgebracht.

## Beschreibung

Gegenstand der Erfindung ist ein galvanisches Element mit mindestens einer Lithium interkalierenden Elektrode, dessen positive Elektrode einen vorbehandelten, im wesentlichen aus Aluminium bestehenden Kollektor besitzt.

Die aktiven Elektrodenmaterialien derartiger galvanischer Elemente sind anorganische Verbindungen, die in der Lage sind, lonen des drittleichtesten Elementes Lithium reversibel ein- und auszulagern. Typische Beispiele für die negative Elektrode sind hierbei graphitartige Kohlenstoffe, für die positive Elektrode Lithiumübergangsmetalloxide wie Li-CoO₂. Die dabei möglichen Lithiumaktivitäten resultieren in erreichbaren Spannungen von mehr als 4 Volt in der vollgeladenen Zelle, weitere Erhöhungen der Spannungen sind zur Zeit im wesentlichen nur noch durch die Zersetzungsspannung der verwendeten organisch basierten Lithiumelektrolyte bedingt. Die Kombinationen hoher erreichbarer Spannungen mit leichten Materialien wie Graphit führen in diesen Zellen zu den zur Zeit höchsten erreichbaren volumetrischen und gravimetrischen Energiedichten für wiederaufladbare galvanische Zellen.

In einer besonderen Ausgestaltung werden die aktiven Elektrodenmaterialien zunächst auf die Ableitelektroden mittels direkter Beschichtung oder Lamination aufgebracht und anschließend mit einem vorbeschichteten Polyolefinseparator durch Lamination verbunden. Der so entstandene Verbund zeichnet sich durch die sehr gute mechanische und elektrische Kontaktierung aller Bestandteile untereinander aus.

In solchen wiederaufladbaren Lithiumzellen mit typischen Nennspannungen von 3,7 Volt und maximalen Ladespannungen von 4,2 Volt wird auf der positiven Seite in der Regel aus Gründen der Gewichts- und Kostenersparnis, der hohen elektrischen Leitfähigkeit, aber auch der elektrochemischen Stabilität Aluminium als Kollektormaterial verwendet. Die natürliche Oxidschicht des Aluminiums verhindert dabei jedoch optimale Elektrodenhaftung und niedrige Impedanzen. Eine geringe Impedanz bedeutet auch immer höhere Belastbarkeit, ganz besonders unter Pulsprofilen, und damit höhere Nutzkapazitäten. Derartige Pulsprofile sind üblich bei dem Betreiben eines jeden schnurlosen Telefons, ein relativ niedriger kontinuierlicher Grundstrom im Bereich von einigen hundert Milliampere wechselt im Millisekundentakt mit einem Puls im Bereich von bis zu 2 Ampere, der Puls ist dabei im Submillisekundenbereich.

Zur Verbesserung der Elektrodenhaftung und zur Senkung des Übergangswiderstandes zwischen Kollektor und Elektrodenfilm werden Kollektorbeschichtungen aus organischen Leitfähigkeitsverbessern, im folgenden als sogenannte "Primer" bezeichnet, eingesetzt. Diese können noch zusätzliche Säuregruppen enthalten, durch die eine in-situ Ätzung des Kollektors erfolgt. Die Ätzung und damit die Säuregruppen sind aber nicht zwingend, und es kann sogar vollständig darauf verzichtet werden.

Dies wird mit dem herabgesetzten Übergangswiderstand zwischen dem Aluminium und dem Primer erklärt, da letzterer hochleitfähige Partikel (in der Regel Kohlenstoffe oder Metallpartikel) enthält, die dann auf einem ebenfalls sehr gut leitfähigen metallischen Träger, nämlich dem Aluminium, aufgebracht sind. Ein bekanntes Problem dabei ist aber die elektrochemische Instabilität solcher Primer bei hohen Temperaturen und gleichzeitig voll geladenen Zellen. Dies führt zur elektrochemischen Zersetzung des Primers unter starker Gasentwicklung, so daß die Zelle anschwillt. Ein weiteres Problem ist, daß die Primerbeschichtung nicht schweißbar ist, so daß dieser mit entsprechenden Masken aufgetragen werden muß, um primerfreie Zonen zu erhalten, die die Schweißbarkeit ermöglichen. Dies führt zur Einbußen an Flexibilität und erhöhten Lagerbeständen sowie komplexerer Logistik, da jede Zellgröße andere primerfreie Zonen und somit Geometrien bei der Beschichtung benötigt.

Das Dokument DE 198 07 192 A1 beschreibt eine Beschichtung eines Aluminium-Kollektors für eine Lithium-Ionen-Zelle mittels Zink und ZinkOxid. Hierbei wird der Kollektor zuvor basisch geätzt. Von Vorteil ist ein Schutz gegen schnelle Korrosion, nachteilig ist aber die Art der Konservierung, da mit der Zeit davon auszugehen ist, daß das Zink an der positiven Elektrode durch vollständige Oxidation zu Zinkoxid insbesondere bei höheren Temperaturen die Impedanz ansteigen lassen wird und, wie Versuche gezeigt haben, daraus schlechtes Zyklisierungsverhalten resultiert.

Weiter ist die Vorbehandlung des Aluminium-Kollektors mittels naßchemischem Ätzen mit einer Lauge oder Säure zur Entfernung der oberflächlichen Oxidschicht möglich. Die Oberfläche des so vorbehandelten Aluminium-Kollektors ist jedoch hoch reaktiv und bildet deshalb an Luft sehr schnell wieder eine Oxidschicht aus. Dadurch ist eine extrem schnelle Verarbeitung des Kollektors erforderlich. Dies kann aus produktionstechnischer und logistischer Sicht einen Nachteil des dort beschriebenen Verfahrens darstellen.
Die Druckschriften DE 100 30 571 C1, US 5,824,120 und US 5,798,190 beschreiben Primer bzw. elektronisch leitfähige Haftvermittler mit Leitrußen und Leitgraphiten. Bei dieser Kollektorbehandlung muß die Oxidschicht nicht in einem Ätzprozeß zuvor entfernt werden. Wie schon erwähnt, enthalten die Leitfähigkeitsverbesserer bei einer möglichen Ausführung noch zusätzliche Säuregruppen, durch die eine in-situ Ätzung erfolgt. Diese besondere Ausführung und die Ätzung sind aber nicht zwingend. Der elektrisch leitfähige Haftvermittler, der aus einem haftenden, zunächst gelösten Polymer besteht, in dem Leitgraphite oder Leitruße suspendiert sind, wird auf den Aluminium-Kollektor in einer Dicke im µm-Bereich aufgetragen, beispielsweise durch Aufsprühen oder in einem Tauchbad und anschließender Trocknung. Bei diesem Verfahren wird eine gute mechanische Anbindung erreicht, und trotz der Anwesenheit der dünnen Aluminiumoxidschicht werden sehr niedrige lmpedanzen in der unter Verwendung so behandelter Elektrodenkollektoren hergestellten Batterie erzielt. Durch Anwesenheit von elektrisch hochleitenden Bestandteilen im Haftvermittler wird offenbar der Übergangswiderstand zwischen Aluminium und Primer deutlich herabgesetzt. Der organische Bestandteil des Primers ist aber in der Regel bei hohen Temperaturen wie 80 °C und einer typischen maximalen Arbeitsspannung der Zelle von 4,2 Volt elektrochemisch nicht stabil und zersetzt sich irreversibel. Hierbei entstehen gasförmige Reaktionsprodukte, und die Zelle schwillt an, insbesondere in einer Softpack-Verpackung, d. h. einer Verpackung in Aluminium/Kunststoffverbundfolie, die in der Regel tiefgezogen ist. Zudem steigt die Impedanz, und die danach noch nutzbare Kapazität sinkt, die Zelle wird irreversibel geschädigt. Ein weiteres Problem ist, daß mit Primer behandelte Kollektoren nicht schweißbar sind. Dies bedeutet, der Primerauftrag muß mit Masken erfolgen, um hier primerfreie Zonen zu erhalten, die die Schweißbarkeit ermöglichen.

Die Dokumente DE 101 14 232 C2 und DE 34 12 234 A1 beschreiben elektrisch leitfähige Haftvermittler mit metallischem Leitmaterial. Hierbei besteht die Beschichtungsmasse aus einer Suspension von metallischen Partikeln in einem gelösten organischen Binder, aber die zuvor angesprochenen elektrochemischen Nachteile treten auch bei derartigen Beschichtungen auf.

Elektrochemisch unter diesen Bedingungen in dem galvanischen Element weitaus stabilere Binder sind fluororganische Polymere wie Polyvinylidendifluorid, kurz PVDF. Eigene Untersuchungen zeigen, daß Gasung bei hohen Temperaturen zeitlich extrem verzögert wird und trotzdem beim Zellbetrieb niedrige Impedanzen und gute Zyklenfestigkeit erreicht werden. Ein Nachteil ist jedoch, daß die großtechnische Beschichtung sehr aufwendig ist, da hochsiedende Lösungsmittel verwendet werden müssen, die anschließend sehr schwer wieder zu entfernen sind. Zudem ist eine naßchemische Beschichtung aus umweltpolitischer Sicht stets ungünstig, da zu entsorgende Lösemittel anfallen. Darüber hinaus ist die Beschichtungsgeschwindigkeit begrenzt, da das zum Teil hochsiedende Lösemittel abdampfen muß.

Die US 5,518,839 beschreibt eine galvanische Beschichtung eines Aluminiumkollektors mit Metallen wie Nickel, Kupfer, Chrom, Titan und Mischungen aus diesen. Neben der ungeeigneten elektrochemischen Stabilität in den eingangs genannten Zellen für die Metalle Nickel, Kupfer und Chrom wird bei Titan keine Verbesserung der Impedanz erzielt. Zudem sind galvanische Abscheideverfahren für den angegebenen Zweck wenig hochgeschwindigkeitstauglich und in der Regel umweltbelastend und mit entsprechenden Auflagen verbunden.

Die US 5,047,302 beschreibt Metalle und Legierungen aus der Gruppe Gold, Platin, Nickel, Chrom oder Chrom-Nickel, die auf einen Aluminumkollektor, von dem die natürliche Oxidschicht nicht zuvor entfernt wurde, aufgebracht werden. Sämtliche dieser Beschichtungen sind jedoch in einer galvanischen Zelle der eingangs genannten Art elektrochemisch inkompatibel.

Der Erfindung liegt die Aufgabe zugrunde, eine Vorbehandlung des (positiven) Aluminiumkollektors für Zellen der eingangs genannten Art anzugeben, die eine oxidfreie, hochleitende Aluminiumoberfläche erzeugt und diese vor erneuter Oxidation an Luft schützt. Die erhaltene Aluminiumoberfläche soll keinen elektrochemisch instabilen Polymer-Binder enthalten. Sie soll die Zellimpedanz deutlich absenken, elektrochemisch aber dennoch kompatibel sein. Eine weitere wichtige Anforderung ist eine gute Schweißbarkeit des Materials.

Diese Aufgabe wird gelöst durch das galvanische Element mit den Merkmalen des Anspruchs 1 sowie den positiven Elektrode-Kollektor-Verbund gemäß Anspruch 7. Bevorzugte Ausführungen dieser beiden Gegenstände sind in den abhängigen Ansprüchen 2 bis 6 bzw. 8 dargestellt. Darüber hinaus umfaßt die Erfindung das Verfahren mit den Merkmalen des Anspruchs 9, wobei bevorzugte Ausführungen dieses Verfahrens in den abhängigen Ansprüchen 10 bis 17 beschrieben sind.
Der Inhalt sämtlicher Ansprüche wird hiermit durch Bezugnahme zum Inhalt dieser Beschreibung gemacht.

Erfindungsgemäß ist dabei der im wesentlichen aus Aluminium (AI) bestehende Kollektor der positiven Elektrode, der in der Regel durch eine chemische Vorbehandlung gereinigt und nahezu oxidfrei gemacht wurde, durch Auftragung einer Deckschicht so konserviert, daß eine Lagerung der Aluminiumkollektoren an Luft möglich wird. Das (erneute) Aufwachsen einer Oxidschicht wird zuverlässig verhindert. Als Beschichtungsmittel dient ein Benzotriazolderivat, welches zum Auftragen vorzugsweise mit einem Lösungsmittel oder Lösungsmittelgemisch, beispielsweise Aceton/Ethanol, verdünnt wird. Besonders geeignet sind Benzotriazolderivate mit der folgenden Strukturformel 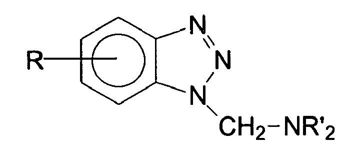
wobei R und R' H oder C₁-C₆-Alkyl sind.

Als Benzotriazolderivat kann beispielsweise das sogenannte IRGAMET 39 (Fa. Ciba Spezialitäten Chemie GmbH, Lampertheim, Deutschland) eingesetzt werden.

Die Auftragung der Deckschicht erfolgt vorzugsweise in direktem Anschluß an eine Vorbehandlung, vorzugsweise über ein (Tauch-)Bad, durch das der Kollektor als Bandware geführt wird.

Die Vorbehandlung und somit die Entfernung der Oxidschicht kann durch naßchemisches Ätzen im sauren oder alkalischen Milieu erfolgen.

Im alkalischen Milieu (z. B. 5 %ige wäßrige NaOH) verläuft die Reaktion nach folgendem Reaktionsmechanismus:

2 Al + 6 H₂0 + 2 OH⁻ → 2 [Al(OH₄)⁻ + 3 H₂

Das Aluminium wird unter Wasserstoffentwicklung oxidiert und als [Al(OH)₄]⁻ gelöst. Dies führt zur Auflösung und Absprengung der oberflächlich gebildeten Oxidschicht sowie zur Entfernung eventuell vorhandener Verschmutzungen, die eine gute mechanische und elektrische Anbindung des positiven Massefilms verhindern würden. Um ein weiteres Auflösen des Aluminiums zu verhindern, wird der Kollektor erst in destilliertem Wasser, dann in Aceton ausgewaschen und anschließend getrocknet.

Soll das naßchemische Verfahren im sauren Milieu durchgeführt werden, wird beispielsweise eine Lösung von (NH₄)HF₂ in Schwefelsäure verwendet.

Der positive Kollektor ist vorzugsweise ein Aluminiumstreckgitter bzw. Aluminiumstreckmetall oder eine in beliebiger Geometrie gelochte oder massive Aluminiumfolie.

Durch die erfindungsgemäße Vorbehandlung und Beschichtung wird ein lagerfähiges Kollektormaterial mit positiven Eigenschaften insbesondere für die Lithium-Polymer-Batterie realisiert, obwohl diese dünne aufgebrachte Deckschicht kein haftvermittelndes Polymer enthält, wie es beim klassischen Primer der Fall ist.

Hervorzuheben ist insbesondere die gute Lagerstabilität des so behandelten Kollektormaterials unter Umgebungsbedingungen. Auch erst nach mehreren Tagen verarbeitete und so gelagerte Kollektoren zeigen praktisch keinen Anstieg der durch die Konservierung niedrigen Impedanz in der galvanischen Zelle.

Ein weiterer Vorteil ist die gute Schweißbarkeit so beschichteter Aluminium-Kollektoren, so daß hier ein einfaches Tauchbad ohne Masken eine einfach durchzuführende Beschichtung mit dem Elektrodenmaterial ermöglicht.

Die so hergestellten Kollektoren und die daraus resultierenden positiven Elektroden (positiver Elektrode-Kollektor-Verbund) zeigen herausragende Eigenschaften in der galvanischen Zelle, insbesondere in der lmpedanz. Diese Eigenschaften sind weiter unten in Tabelle 1 dargestellt.

Nach dem erfindungsgemäßen Verfahren hergestellte positive Elektroden können in einem Folgeprozeß durch Lamination zu einem mehrschichtigen Verbund aus positiven Elektroden weiterverarbeitet werden. Der so erhaltene Elektroden-Kollektor-Verbund wird als positive Gesamtelektrode wiederum durch Lamination mit einer negativen Gesamtelektrode und einem Separator verbunden. Dieser Verbund wird durch Tränken mit einem flüssigen organischen Elektrolyten aktiviert.

Als elektrochemisch aktives Material für eine positive Elektrode wird ein Material aus der Gruppe ternärer (Li-Me1-O) oder quaternärer (Li-Me1-Me2-O) Lithiumübergangsmetalloxide verwendet, wobei Me1 und Me2 aus einer Gruppe mit Ti, V, Cr, Fe, Mn, Ni, Co ausgewählt sind. Die Verbindung enthält gegebenenfalls zusätzlich bis zu 15 Atom-Prozent Mg, Al, N oder F zur Stabilisierung der Struktur. Als elektrochemisch aktives Material für die negative Elektrode wird beispielsweise eine graphitisierte Kohlenstoffmodifikation verwendet.

Es können auch Verfahren zur Herstellung von Elektrodenfolien verwendet werden, bei denen ein PVDF-HFP-Copolymer (Polyvinylidenfluorid-Hexafluorpropylen-Copolymer) in einem Lösungsmittel gelöst, mit einem hochleitfähigen Ruß, dessen spezifische Oberfläche (bestimmt nach BET) zwischen der von oberflächenminimiertem Graphit und aktiviertem Kohlenstoff liegt, und mit einem elektrochemisch aktiven Material mit einer zweidimensionalen Schichtstruktur und einer elektronischen Leitfähigkeit von mindestens 10⁻⁴ S/cm, in welches Lithium reversibel ein- und ausbaubar ist, vermischt wird. Die so erhaltene pastöse Masse wird auf den Kollektor aufgebracht und getrocknet.

Vor der Elektrolyttränkung wird der durch den Laminationsprozeß hergestellte Verbund aus positiver Elektrode, negativer Elektrode und Separator bevorzugt in einem flexiblen Zellengehäuse aus Aluminiumverbundfolie angeordnet.

Zellen mit erfindungsgemäßen Kollektoren und positive Elektroden zeigen zum einen optimale mechanische Haftung und zum anderen sehr guten elektrischen Kontakt zwischen Kollektor und Elektrodenmaterial und dadurch bedingt den gewünschten niedrigen Innenwiderstand. Im Vergleich zu Zellen ohne Kollektorvorbehandlung ermöglicht dies insbesondere bei Pulsbelastung (z. B. Mobilfunk, GSM (Global System for Mobile Communication)-Standard) höhere Entladekapazitäten.

Bei erhöhter Temperatur wird keine Gasung der Zelle beobachtet, da unerwünschte Nebenreaktionen wie beim Einsatz von Haftvermittlern und Leitfähigkeitsverbesserern ausgeschlossen sind.

**Tabelle 1: Lithiumpolymerzelle mit den äußeren Abmessungen 3,8 x 35 x 62 mm³ und einer Kapazität von 750 mAh.**

| **Ausführung der Zelle** | **AC-Impedanz (1 kHz) 3,9 V** | **Gasung bei 80 °C nach 48 h, Zellspannung initial 4,2 V** |
|---|---|---|
| **Al-Kollektor: mit Primer beschichtet** | **57 - 59** | **Gasung** |
| **Al-Kollektor: Oxidschicht durch Ätzen entfernt, keine Lagerung, sofortige Weiterverarbeitung** | **59 mOhm** | **keine Gasung** |
| **AI-Kollektor: Oxidschicht durch Ätzen entfernt, danach 24 h an Luft gelagert** | **82 mOhm** | **keine Gasung** |
| **AI-Kollektor: Oxidschicht durch Ätzen entfernt, beschichtet mit IRGAMET 39, danach 24 h an Luft gelagert** | **57 mOhm** | **Keine Gasung** |

Die Impedanzmessung gibt den inneren Wechselstromwiderstand einer Zelle an. Hierbei ist ein möglichst geringer Widerstand wünschenswert.

Die Impedanzen der Zellen mit so hergestellten Kollektoren sind identisch zu Impedanzen von Zellen mit geprimerten Kollektoren, und die erfindungsgemäß hergestellten Zellen zeigen jedoch im Gegensatz zu Zellen mit geprimerten Kollektoren keine Gasung bei 80 °C und 4,2 Volt.

Die Erfindung ist besonders vorteilhaft bei der Herstellung wiederaufladbarer Lithium-Zellen in Stapeltechnologie. Es ergibt sich eine Verbesserung der Haftung innerhalb des Kollektor-Elektrodenmaterial-/Film-Laminats, und es wird ein hochleitender elektrischer Kontakt zwischen Kollektor und Elektrodenmaterial erzeugt, ohne den Einsatz von problematischen Haftvermittlern, die Bestandteile enthalten, welche sich bei Lagerung oder während des Betriebs der Zelle zersetzen können.

## Patentansprüche

1. Galvanisches Element mit mindestens einer Lithium interkalierenden Elektrode, dessen positive Elektrode einen im wesentlichen aus Aluminium bestehenden Kollektor besitzt, **dadurch gekennzeichnet, daß** der Kollektor eine Deckschicht, die im wesentlichen aus einem Benzotriazolderivat besteht, aufweist.

2. Galvanisches Element nach Anspruch 1, **dadurch gekennzeichnet, daß** das Benzotriazolderivat die folgende Strukturformel besitzt 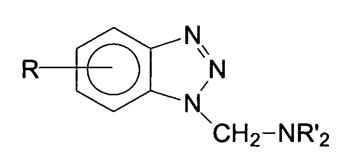
wobei R und R' H oder C₁-C₆-Alkyl sind.

3. Galvanisches Element nach Anspruch 1 oder Anspruch 2, **dadurch gekennzeichnet, daß** es sich bei dem Benzotriazolderivat um das sogenannte IRGAMET 39 handelt.

4. Galvanisches Element nach einem der vorhergehenden Ansprüche, **dadurch gekennzeichnet, daß** eine auf dem Kollektor vor dem Aufbringen der Deckschicht gegebenenfalls vorhandene Oxidschicht entfernt ist.

5. Galvanisches Element nach einem der vorhergehenden Ansprüche, **dadurch gekennzeichnet, daß** der Kollektor ein Aluminiumstreckgitter bzw. Aluminiumstreckmetall oder eine in beliebiger Geometrie gelochte oder massive Aluminiumfolie ist.

6. Galvanisches Element nach einem der vorhergehenden Ansprüche, **dadurch gekennzeichnet, daß** die Deckschicht mittels eines Tauchverfahrens auf den Kollektor aufgebracht ist.

7. Positiver Elektrode-Kollektor-Verbund für ein galvanisches Element nach einem der vorhergehenden Ansprüche, insbesondere für ein galvanisches Element in Stapeltechnologie, **dadurch gekennzeichnet, daß** der im wesentlichen aus Aluminium bestehende Kollektor eine Deckschicht, die im wesentlichen aus einem Benzotriazolderivat besteht, aufweist.

8. Elektrode-Kollektor-Verbund nach Anspruch 7, weiter **gekennzeichnet durch** mindestens eines der Merkmale des kennzeichnenden Teils der Ansprüche 2 bis 6.

9. Verfahren zur Herstellung eines positiven Elektrode-Kollektor-Verbunds für galvanische Elemente mit mindestens einer Lithium interkalierenden Elektrode, insbesondere in Stapeltechnologie, **dadurch gekennzeichnet, daß** ein im wesentlichen aus Aluminium bestehender Kollektor mit einer Deckschicht, die im wesentlichen aus einem Benzotriazolderivat besteht, beschichtet und, gegebenenfalls nach einer Zwischenlagerung, auf die so erhaltene Deckschicht das positive aktive Elektrodenmaterial aufgebracht wird.

10. Verfahren nach Anspruch 9, **dadurch gekennzeichnet, daß** das Benzotrialzolderivat die folgende Strukturformel besitzt 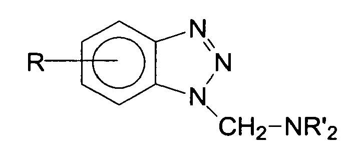
wobei R und R' H oder C₁-C₆-Alkyl sind.

11. Verfahren nach Anspruch 9 oder Anspruch 10, **dadurch gekennzeichnet, daß** es sich bei dem Benzotriazolderivat um das sogenannte IRGAMET 39 handelt.

12. Verfahren nach einem der Ansprüche 9 bis 11, **dadurch gekennzeichnet, daß** eine auf dem Kollektor vor dem Aufbringen der Deckschicht gegebenenfalls vorhandene Oxidschicht entfernt wird.

13. Verfahren nach Anspruch 12, **dadurch gekennzeichnet, daß** die Oxidschicht durch naßchemisches Ätzen im sauren oder alkalischen Milieu entfernt wird.

14. Verfahren nach einem der Ansprüche 9 bis 13, **dadurch gekennzeichnet, daß** die Deckschicht aus dem Benzotriazolderivat mittels eines Tauchverfahrens auf den Kollektor aufgebracht wird.

15. Verfahren nach einem der Ansprüche 9 bis 14, **dadurch gekennzeichnet, daß** das positive aktive Elektrodenmaterial durch einen Laminationsprozeß aufgebracht wird, wobei vorzugsweise dieser Laminationsprozeß bei erhöhter Temperatur, insbesondere in einem Temperaturbereich zwischen 100 °C und 200 °C durchgeführt wird.

16. Verfahren nach Anspruch 15, **dadurch gekennzeichnet, daß** dem Laminationsprozeß mindestens ein Kalandrierungsschritt nachgeschaltet ist.

17. Verfahren nach einem der Ansprüche 9 bis 16, **dadurch gekennzeichnet, daß** der Kollektor ein Aluminiumstreckgitter bzw. Aluminiumstreckmetall oder eine in beliebiger Geometrie gelochte oder massive Aluminiumfolie ist.
